# EUROPEAN PATENT APPLICATION

(11) **EP 3 287 367 A1**
(43) Date of publication of application: **28.02.2018**
(21) Application number: 16185917.8
(22) Date of filing: 26.08.2016
(51) Int. Cl.: B64C 39/02, G05D 1/10, G05D 1/00, F03D 17/00, F03D 80/50

(54) **INTERNAL INSPECTION OF A WIND TURBINE**

(71) Applicant: Siemens Aktiengesellschaft, 80333 München (DE)
(72) Inventor: Pedersen, Henrik, 7400 Herning (DK)

(57) **Abstract**

A method is proposed for internal inspection of a wind turbine, comprising the following steps
- activating at least one unmanned aerial vehicle located inside the wind turbine,
- performing an internal inspection with the at least one activated unmanned aerial vehicle inside the wind turbine.

Further, a system, an unmanned aerial vehicle and monitoring center are suggested for performing said method.

## Description

The invention relates to a method, a system and an unmanned aerial vehicle as well as a monitoring center for internal inspection of a wind turbine.

During lifetime of a wind turbine, a number of inspections have to be performed on a regular basis thereby maintaining availability and operability of the wind turbine as well as complying with certifications.

Inspection may be based on measurements using specific sensors which may be already implemented in the wind turbine or based on measurements using special measuring equipment brought to the wind turbine.

Inspection may also be a visual inspection by the eyes of a service technician.

One possible approach for performing aforementioned inspections may be the emission of a service team to the respective wind turbine executing the needed inspection manually.

Alternatively, some of these inspections may be replaced by a remote inspection or verification using sensors located or implemented in the wind turbine and being controlled remotely via a remote monitoring and/or diagnostic center connected by means of telecommunication without sending a service team.

However, there are still some inspections remaining on a visual basis and thus still require a service team to visit the respective wind turbine. As a disadvantage, visual inspections require additional logistic effort and thus are cost-intensive.

The object is thus to overcome the aforementioned disadvantages and in particular to provide an improved approach for inspecting a wind turbine.

This problem is solved according to the features of the independent claims. Further embodiments result from the depending claims.

In order to overcome this problem, a method is provided for internal inspection of a wind turbine, comprising the following steps:
- activating at least one unmanned aerial vehicle located inside a wind turbine,
- performing an internal inspection with the at least one activated unmanned aerial vehicle inside the wind turbine.

Unmanned Aerial Vehicle ("UAV") may be any type of aviation equipment having the capability to navigate airborne inside the wind turbine like. One exemplary embodiment of a Unmanned Aerial Vehicle is a drone which may be designed according to a quadcopter, hexacopter or octocopter type.

Performing an internal inspection inside a wind turbine means performing any inspection executed inside a wind turbine enclosure including any structural body being part of the wind turbine enclosure and/or any structural body, component or element located, positioned or arranged inside the wind turbine like, e.g.
- a transition piece,
- a tower,
- a tower section,
- a nacelle,
- a rotor hub,
- a rotor blade
- a spinner

Activation of an unmanned aerial vehicle may be a change from an inactive mode to an active mode. During the inactive mode (which may be an idle- or standby-mode) the unmanned aerial vehicle may be located at a defined or specified position/location ("standby position") inside the wind turbine. Optionally, the specified location may comprise a charging unit supplying/charging the inactive unmanned aerial vehicle with energy like, e.g., electrical energy.

The activation of the unmanned aerial vehicle may be triggered by control information provided from external like, e.g. by an external central monitoring/diagnostic center ("external monitoring center"). For that the unmanned aerial vehicle and the monitoring/diagnostic center as well as the wind turbine are equipped with a suitable communication system allowing an exchange of the control information via a communication path being setup via the aforementioned communication partners.

Alternatively, the activation of the unmanned aerial vehicle may follow a scheduled or programmed inspection plan without any external trigger or control information provided externally.

The communication system may be designed as a bidirectional communication system allowing a two-way-communication via the communication path.

The communication between the unmanned aerial vehicle and the monitoring/diagnostic center may be established via a relay- or intermediate-station being assigned to the wind turbine thereby subdividing the communication path into a first part and at least one second part. As an example, the first part of the communication path may be based on wireless transmission technology allowing wireless data transmission between the unmanned aerial vehicle and the relay-station. The second part of the communication path established between the relay-station and the external monitoring/diagnostic center may be based on a wireless or wire-line based transmission technology

Examples for wireless transmission technology are:
- Bluetooth
- Wi-Fi or WLAN, or
- any other transmission based on radio waves.

Examples for wire-line based transmission technology are
- Asynchronous Digital Subscriber Line (ADSL), or
- any other transmission based on wire-line or optical fiber.

For performing an internal inspection the unmanned aerial vehicle may be equipped with a proper visual information capturing system suitable for inspection activities like, e.g., an image and/or video capturing system allowing capturing images or videos inside the wind turbine. Exemplary embodiments of such kind of capturing systems may be
- an optical sensor system like an optical camera system, e.g. a "CCD camera"
- an ultrasonic system,
- an infrared camera system allowing inspection of heat distribution and propagation,
- a high frequency system,
- a thermal camera system,
- any combination thereof.

The captured information may be transferred via the communication path to the central monitoring/diagnostic center for storage and further processing like, e.g. analyzing the visual information provided by the unmanned aerial vehicle. As a result, damages, faults or deviations may be identified and respective steps for clearing those identified damages may be initiated. Clearing of damages may be eliminating, fixing and/or repairing.

Further, the captured visual information may be displayed on a screen in real time in the central monitoring/diagnostic center being the basis for generating control information to be provided to the unmanned aerial vehicle via the communication path to navigate the unmanned aerial vehicle inside the wind turbine.

Replacing time- and const-intensive manual, i.e. personnel visual inspections inside wind turbine by use of an unmanned aerial vehicle allows a significant reduction of time a service team needs to spend in the wind turbine during their visit for performing scheduled service activities including visual inspections.

By reducing or avoiding manual activities inside the wind turbine a potential risk of personal injury of service team members may be minimized or removed.

As a further advantage, inspections of the wind turbine can be performed more frequently without additional costs. Thus, wind turbines may be inspected, e.g., per month or per week, rather than annually being the current standard.

Higher frequency of inspections enables the external, i.e. remote monitoring/diagnostic center to act proactively as potential damages, faults or deviations can be identified at an earlier stage.

Offshore wind turbines are inaccessible when inappropriate weather conditions prevent a service team from visiting the wind turbine for inspection. Advantageously, the inspection or at least a major part of the inspection can be performed with the help of the unmanned aerial vehicle located inside the wind turbine at all times.

By storing the captured information like images and videos on a long term basis historical information may be provided for later processing ("post-processing").

In an embodiment of the proposed solution, the performance of the internal inspection by the at least one unmanned aerial vehicle is
- controlled remotely according to provided control information and/or
- controlled autonomously.

Autonomous control may be any kind of performance control without using a remote control or without using control information provided remotely or from external like, e.g. from an external control/monitoring center.

Pursuant to another embodiment the performance of the internal inspection by the at least one unmanned aerial vehicle is controlled autonomously based on autonomous navigation.

In another embodiment, during an inactive mode the at least one unmanned aerial vehicle is located at a defined position inside the wind turbine

In a further embodiment, the internal inspection is performed along a defined route within the wind turbine

In a next embodiment, visual information is captured by the at least one unmanned aerial vehicle during performance of the internal inspection.

It is also an embodiment that the captured visual information is transferred towards an external monitoring center for storing and/or further processing.

Pursuant to another embodiment, the provided control information is generated based on the captured visual information.

According to an embodiment, the autonomous navigation of the at least one unmanned aerial vehicle is based on autonomous location of the at least one unmanned aerial vehicle thereby using at least one of the following location technologies:
- radar
- laser
- ultrasonic
- stereovision
- monovision

The problem stated above is also solved by a system for internal inspection of a wind turbine, comprising
- at least one processing unit that is arranged for
   - activating at least one unmanned aerial vehicle located inside a wind turbine,
   - performing an internal inspection with the at least one activated unmanned aerial vehicle inside the wind turbine.

In an embodiment, the system comprises a communication system establishing a communication path between the unmanned aerial vehicle and an external monitoring/diagnostic center.

The problem stated above is also solved by an unmanned aerial vehicle comprising and/or being associated with a processor unit and/or hard-wired circuit and/or logic device that is arranged such that the method as described herein is executable thereon.

Said processing unit may comprise at least one of the following: a processor, a microcontroller, a hard-wired circuit, an ASIC, an FPGA, a logic device like, e.g. a storage of memory.

The problem stated above is also solved by a monitoring center comprising and/or being associated with a processor unit and/or hard-wired circuit and/or logic device that is arranged such that the method as described herein is executable thereon.

Embodiments of the invention are shown and illustrated in the following figures:

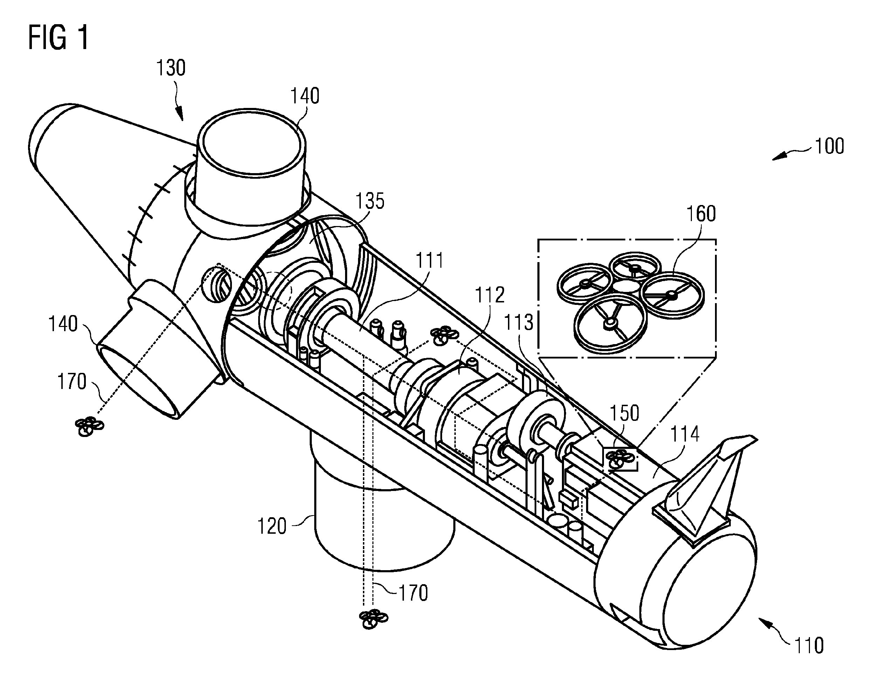

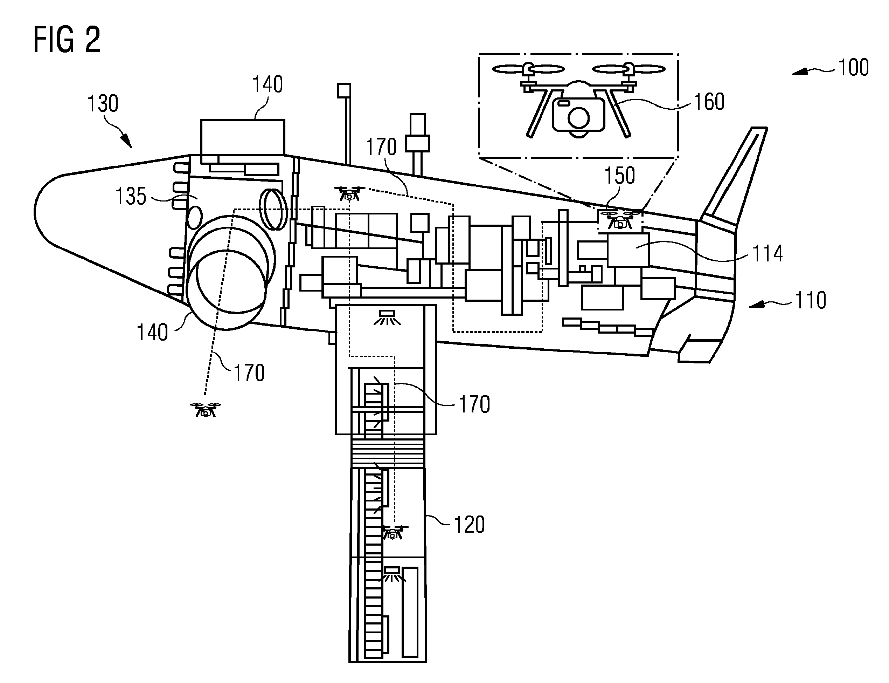

- Fig.1: shows a schematically view of an exemplary embodiment of an internal inspection of a wind turbine according to the proposed solution.

Fig.1 shows a two-part view inside a structure of a wind turbine 100. Thereby, an upper part of Fig.1 shows a schematically perspective view or partially perspective view of any structural body being part of the wind turbine enclosure and any structural body, component or element located, positioned or arranged inside the wind turbine 100. Correspondingly, a schematically side view of the wind turbine is shown in the bottom part of Fig.1.

Part of the structure or structural body may be a nacelle 110 being rotatable mounted on top of a tower 120. A rotor 130 is attached to an upwind side of the nacelle 120. The rotor 130 includes a central rotor hub 135 and a plurality of rotor blades 140 mounted to and extending radially from the rotor hub 135 defining a rotor plane.

Further components of the structural body might be, e.g.
- a main shaft 111
- a transmission piece 112
- a gear box 113
- a generator 114

According to the exemplary scenario of Fig.1 a charging station 150 is located at the upper side of the generator 114 where a drone 160 being in inactive mode may reside during, e.g., an idle- or standby-mode.

According to an exemplary embodiment of the proposed solution, the drone 160 will be switched to an active mode ("activation of the drone") by receiving a respective control information being sent out from a remote monitoring/diagnostic center via an established communication path.

Alternatively, the drone 160 may be activated by a scheduled time plan being part of a control logic being programmed and stored in a memory of the drone 160.

During active mode, the drone 160 will follow a predefined path or route (indicated by a dotted line 170 in Fig.1) wherein the route 170 or positions representing the route 170 may also be part of the control logic.

According to an exemplary embodiment, the drone 160 may follow the route 170 thereby navigating autonomously and positioning itself towards one of more locations or positions within or along the structure of the wind turbine 100 required to be inspected.

Due to increasing size of wind turbines and their structural body the route may also be defined along an interior of the tower and/or an interior of the rotor hub and/or an interior of the rotor blade.

Approaching one of these positions, visual information like, e.g., images or videos of the respective component or structural body to be inspected may be captured by e.g. a CCD-camera wherein the captured visual information will be transferred ("uploaded") via the communication path to the central monitoring/diagnostic center for storage and further processing.

Visual information may be captured permanently during the whole flight along the path 170.

The autonomous navigation of the drone may be based e.g. on an autonomous positioning or location system using one or more of the following positioning technologies like, e.g., radar, laser, ultrasonic, stereovision or monovision.

After finalizing the programmed route 170, i.e. after "inspecting" all necessary locations or position inside the wind turbine, the drone 160 may return autonomously to the charging station 150 thereby switching to inactive mode and recharging energy.

According to an alternative embodiment, during performance of the inspection, the captured information may be temporarily stored in a memory located in the unmanned aerial device. After return to the charging station 150 and/or during standby the captured information stored in the memory of the unmanned aerial device may be transferred to the central monitoring/diagnostic center for storage and further processing via the communication path.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method for internal inspection of a wind turbine (100) , comprising the following steps
- activating at least one unmanned aerial vehicle (16) located inside the wind turbine (100),
- performing an internal inspection with the at least one activated unmanned aerial vehicle (160) inside the wind turbine (100).

2. The method according to claim 1, wherein
the performance of the internal inspection by the at least one unmanned aerial vehicle is controlled remotely according to provided control information and/or controlled autonomously.

3. The method according to claim 2, wherein
the performance of the internal inspection by the at least one unmanned aerial vehicle is controlled autonomously based on autonomous navigation.

4. The method according to any of the preceding claims,
wherein during an inactive mode the at least one unmanned aerial vehicle is located at a defined position inside the wind turbine.

5. The method according to any of the preceding claims,
wherein the internal inspection is performed along a defined route within the wind turbine.

6. The method according to any of the preceding claims,
wherein visual information is captured by the at least one unmanned aerial vehicle during performance of the internal inspection.

7. The method according to any of the preceding claims,
wherein the captured visual information is transferred towards an external monitoring center for storing and/or further processing.

8. The method according to claim 7, wherein
the provided control information is generated based on the captured visual information.

9. The method according to any of the preceding claims 3 to 8, wherein
the autonomous navigation of the at least one unmanned aerial vehicle is based on autonomous location of the at least one unmanned aerial vehicle thereby using at least one of the following location technologies:
- radar
- laser
- ultrasonic
- stereovision
- monovision

10. A system for internal inspection of a wind turbine, comprising
- at least one processing unit that is arranged for
- activating at least one unmanned aerial vehicle located inside a wind turbine,
- performing an internal inspection with the at least one activated unmanned aerial vehicle inside the wind turbine.

11. The system according to claim 10, comprising a communication system establishing a communication path between the unmanned aerial vehicle and an external monitoring/diagnostic center.

12. An unmanned aerial vehicle comprising and/or being associated with a processor unit and/or hard-wired circuit and/or logic device that is arranged such that the method according to any of the preceding claims 1 to 9 is executable thereon.

13. A monitoring center comprising and/or being associated with a processor unit and/or hard-wired circuit and/or logic device that is arranged such that the method according to any of the preceding claims 1 to 9 is executable thereon.
